# EUROPÄISCHE PATENTSCHRIFT

(11) **EP 1 974 846 B1**
(45) Veröffentlichungstag und Bekanntmachung des Hinweises auf die Patenterteilung: **15.12.2010**
(21) Anmeldenummer: 07014170.0
(22) Anmeldetag: 19.07.2007
(51) Int. Cl.: B23K 9/133, B23K 9/32, B65H 57/12, B65H 57/14, F16L 11/18, H02G 3/04

(54) **Flexible Führung für einen Schweissdraht mit relativ zueinander in jeder Richtung schwenkbaren Einzelelementen**
Flexible guide for a welding wire with elements articulated in any direction relative one to another
Guide flexible pour un fil de soudure avec des éléments articulés dans toutes les directions l'un par rapport à l'autre

(30) Priorität: 27.03.2007 DE 102007014567; 02.04.2007 DE 102007015946
(43) Veröffentlichungstag der Anmeldung: 01.10.2008
(73) Patentinhaber: SIDERGAS SpA, 37010 S. Ambrogio di Valpolicella (IT)
(72) Erfinder: Gelmetti, Carlo, 37017 Lazise (Verona) (IT)
(74) Vertreter: Prinz & Partner

(56) Entgegenhaltungen:
- DE-A1- 3 909 839
- DE-C1- 19 910 128
- FR-A- 2 888 825
- US-A- 2 329 369
- US-A- 2 483 760
- US-A- 5 215 338
- US-A1- 2002 120 178

## Beschreibung

Die Erfindung betrifft eine flexible Führung, insbesondere für einen Schweißdraht, gemäß dem Oberbegriff des Anspruchs 1 (siehe, z.B., FR 2 888 825).

Eine solche Führung kann dazu verwendet werden, den von einem Schweißroboter verwendeten Schweißdraht zwischen einem Container für den Schweißdraht und dem Schweißkopf zu führen. Die Führung muss flexibel sein, um die Bewegungen des Schweißkopfes nicht zu behindern. Weiterhin muss die Führung gewährleisten, dass der Schweißdraht nicht abknicken kann, da Knickstellen im Schweißdraht den automatisierten Schweißvorgang unterbrechen würden. Schließlich muss die Führung den Schweißdraht vor Verschmutzungen schützen und beim Elektroschweißen gegebenenfalls vor Kontakt mit anderen Gegenständen schützen, um einen Kurzschluss zu verhindern.

Ein großer Teil der beim automatisierten Schweißen auftretenden Probleme lässt sich auf die Reibung des Schweißdrahts zurückführen, die innerhalb der Führungen auftritt, in denen der Schweißdraht vom Schweißdrahtbehälter zu den Antriebsrollen der Drahtzufuhrvorrichtung und von dort zum Schweißkopf geführt wird. Die Reibung führt dazu, dass Schleifspuren und Verformungen auf der Oberfläche des Schweißdrahtes auftreten. Dies führt beim Elektroschweißen zu einer Verringerung der Leitfähigkeit, zu Problemen mit dem Lichtbogen und zu einer Beeinträchtigung der Schweißqualität. Wenn sich die durch Reibung erzeugten Späne oder das zur Verringerung der Reibung verwendete Schmiermittel auf der Oberfläche des Schweißdrahtes festsetzen, führt dies zu einer ungleichmäßigen Schweißdrahtzufuhr, zum Verstopfen der Führungen und zu Problemen mit dem Lichtbogen am Schweißkopf. Wenn der Schweißdraht auf seinem Weg vom Schweißdrahtbehälter zum Schweißkopf übermäßig stark gebogen wird, führt die dann dem Schweißkopf zugeführte Biegestelle dazu, dass der Lichtbogen neben der Stelle verläuft, an der die Schweißnaht sich eigentlich befinden sollte, was dann aufwendige Nacharbeiten erfordert.

Um Schleifspuren auf der Oberfläche des Schweißdrahtes zu vermeiden, ist schon versucht worden, Schweißdrahtführungen aus Kunststoff zu verwenden. Allerdings schneidet sich der Schweißdraht nach vergleichsweise kurzer Zeit durch die Kunststoffumhüllung, so dass erhebliche Probleme bei der Zufuhr entstehen. Bei Schweißdraht aus Aluminium bzw. einer Aluminiumlegierung oder bei Schweißdraht mit einer passivierten Oberfläche können Schleifspuren in der Oberfläche des Schweißdrahtes zu erheblichen Problemen mit der Schweißleistung führen. All diese Probleme betonen die Bedeutung einer reibungsarmen Zuführung des Schweißdrahtes zum Schweißkopf.

Ein Beispiel für eine flexible Schweißdrahtführung zeigt die WO 2007/010171 A2. Diese Führung besteht aus verschiedenen Einzelelementen, wobei jedes Einzelelement mit dem benachbarten Einzelelement durch ein Schwenklager verbunden ist, welches eine Bewegung nur um eine bestimmte Achse zulässt. Innerhalb der Grundkörper der Einzelelemente sind Lagerrollen oder ähnliche Führungsgestaltungen für den Schweißdraht angebracht. Diese Lösung weist insgesamt einen sehr hohen Bauaufwand und damit sehr hohe Kosten auf.

Aus der US-A-2,483,760 ist eine Führung für ein Elektrokabel bekannt, die beispielsweise auf einer Lokomotive angebracht werden kann. Es ist ein Grundkörper vorgesehen, in den vier Lagerblöcke eingesetzt werden können, die mit jeweils einer Schraube fixiert werden. Jeder Lagerblock weist zwei Bohrungen für Lagerachsen auf, auf denen jeweils eine Führungsachse angeordnet ist.

Die Aufgabe der Erfindung besteht darin, eine kostengünstige Führung für einen Schweißdraht zu schaffen, die ein Führen des Schweißdrahtes mit geringem Widerstand bei geringen Kosten ermöglicht.

Zu diesem Zweck ist erfindungsgemäß eine flexible Führung vorgesehen, insbesondere für einen Schweißdraht, gebildet durch eine Mehrzahl von Einzelelementen, die miteinander gelenkig verbunden sind, wobei die Einzelelemente relativ zueinander in jeder Richtung schwenkbar sind, wobei jedes Einzelelement mit einem ersten und einem zweiten Paar von Führungswalzen versehen ist, wobei die Drehachsen des ersten Paares etwa senkrecht zu den Drehachsen des zweiten Paares ausgerichtet sind, wobei die Lagerachsen mindestens von zwei Führungswalzen im Körper des Einzelelements eingerastet sind und wobei die Führungswalzen von außen in den Körper des Einzelelements eingesetzt sind. Dies ermöglicht, universelle Einzelelemente zu verwenden, die bei der Montage nicht in einer bestimmten Reihenfolge aneinandergesetzt werden müssen.

Vorzugsweise sind die Einzelelemente nach Art eines Kugelgelenks miteinander verbunden. Dies ermöglicht insbesondere, die Einzelelemente in einfacher Weise aneinander zu verrasten, indem ein Kugelkopf eines Einzelelements in eine Kugelpfanne des benachbarten Einzelelements einschnappt.

Vorzugsweise ist jedes Einzelelement mit einer Führungsgestaltung für den Schweißdraht versehen, die ein reibungsarmes Verschieben des Schweißdrahtes im Inneren der Führung ermöglicht. Die Führungsgestaltung ist, gemäß der Erfindung, als mehrere im Einzelkörper aufgenommene Wälzkörper, beispielsweise Kugeln oder Zylinderrollen.

Gemäß einer bevorzugten Ausführungsform ist um die Fuhrung herum eine flexible Umhüllung angeordnet, beispielsweise ein Kunststoffschlauch. Dieser verhindert, dass Staub sonstige Schmutzpartikel in die Führung eintreten können und dort zu einer erhöhten Reibung führen

Vorteilhafte Ausgestaltungen der Erfindung ergeben sich aus den Unteransprüchen.

Die Erfindung wird nachfolgend anhand verschiedener Beispiele und Ausführungsformen beschrieben, die in den beigefügten Zeichnungen dargestellt sind. In diesen zeigen:
- die Figuren 1 eine Führung gemäß einem ersten Beispiel, das nicht unter die Patentansprüche fällt;
- die Figuren 2 eine Führung gemäß einem weiten Beispiel, das nicht unter die Patentansprüche fällt;
- die Figuren 3 eine Führung gemäß einem dritten Beispiel, das nicht unter die Patentansprüche fällt;
- die Figuren 4 eine Führung gemäß einem vierten Beispiel, das nicht unter die Patentansprüche fällt;
- die Figuren 5 eine Führung gemäß einem fünften Beispiel, das nicht unter die Patentansprüche fällt;
- Figur 6 eine Führung gemäß einem Beispiel, das nicht unter die Patentansprüche fällt;
- die Figuren 7 eine Führung gemäß einem siebten Beispiel, das nicht unter die Patentansprüche fällt;
- die Figuren 8 eine Führung gemäß einem achten Beispiel, das nicht unter die Patentansprüche fällt;
- die Figuren 9 eine Führung gemäß einem neunten Beispiel, das nicht unter die Patentansprüche fällt;
- Figur 10 eine Führung gemäß einer Ausführungsform der Erfindung
- Figur 11 die Führung von Figur 10, wobei ein Einzelelement geöffnet gezeigt ist;
- Figur 12 eine Hälfte eines Einzelelements für die Führung von Figur 10; und
- Figur 13 schematisch eine Führung gemäß einem zehnten Beispiel,

### das nicht unter die Patentansprüche fällt.

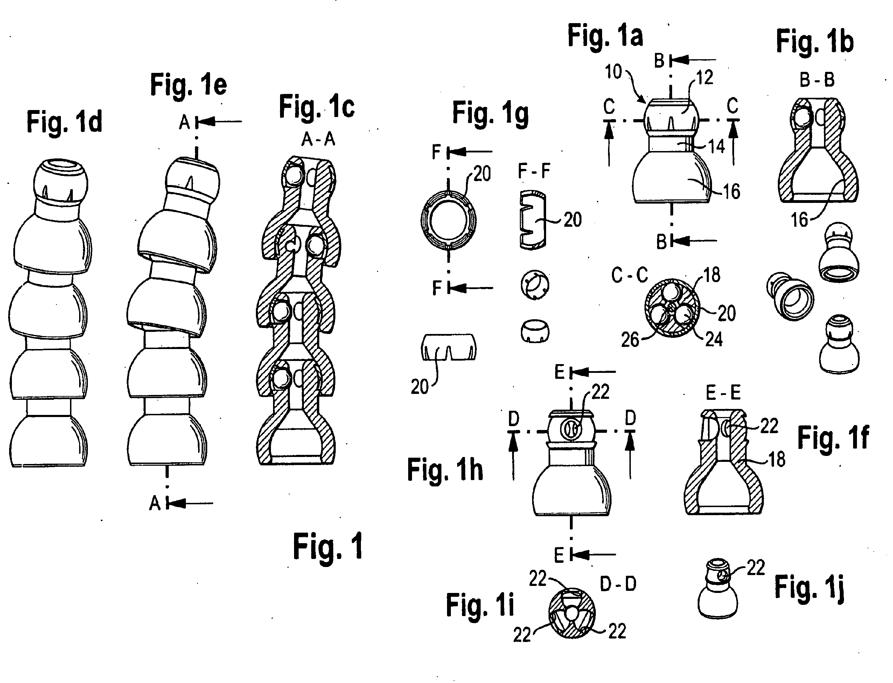

In Figur 1 ist eine Führung, insbesondere für Schweißdraht, gezeigt, die aus mehreren Einzelelementen 10 besteht. Jedes Einzelelement weist einen Körper 14 mit einem Kugelkopf 12 und einer Kugelpfanne 16 auf. Die Kugelpfanne 16 (siehe auch Figur 1b) ist so ausgestaltet, dass sie auf den Kugelkopf 12 eines benachbarten Einzelelements 10 aufgeschnappt werden kann, also dort selbsttätig verrastet. Auf diese Weise kann eine Abfolge von mehreren Einzelelementen gebildet werden, die dann insgesamt die Führung für den Schweißdraht bildet (siehe die Figuren 1c, 1d und 1e).

Jeder Körper 14 ist hier gebildet durch einen Grundkörper 18 (siehe Figur 1f) und ein Ansatzstück 20. Das Ansatzstück 20 wird auf den Grundkörper 18 in dem Bereich aufgesetzt, in welchem später der Kugelkopf 12 gebildet werden soll. Unterhalb des Bereichs, der vom Ansatzstück 20 abgedeckt wird, sind drei Aussparungen 22 im Grundkörper 18 ausgebildet (siehe die Figuren 1f, 1 h, 1i und 1j). In jede Aussparung 22 wird ein Wälzkörper in Form einer Kugel 24eingesetzt (siehe Figur 1k). Die drei Kugeln 24 definieren zusammen eine Führungsgestaltung für einen Schweißdraht 26, der im Inneren der Einzelelemente 10 geführt wird. Das Ansatzstück 20 gewährleistet, dass die Kugeln 24 die Aussparungen 22 nicht nach außen verlassen können.

Wie in den Figuren 1c bis 1e zu sehen ist, ist jedes Einzelelement 10 relativ zum benachbarten Einzelelement im entsprechenden Kugelgelenk schwenkbar. Auf diese Weise kann sich die von den Einzelelementen gebildete Schweißdrahtführung flexibel an den jeweils notwendigen Verlauf anpassen. Die von den Kugeln 24 gebildete Führungsgestaltung für den Schweißdraht gewährleistet, dass dieser Reibungsarm im Inneren der Führung geführt wird, ohne dass es zu einer hohen Reibung kommt, der Schweißdraht verkratzt wird oder eher die Einzelelemente beschädigen kann.

Die Länge der Kugelpfanne bzw. der die Kugelpfanne bildenden Schürze des Grundkörpers 14 ist so bemessen, dass die maximale Schwenkbarkeit eines Einzelelements relativ zum benachbarten Einzelelement beschränkt ist, und zwar auf ein solches Maß, dass der durch die maximal gekrümmte Führung verlaufende Schweißdraht nur an der Führungsgestaltung anliegt und nicht an der Grundkörpern. Dies gewährleistet, dass er leichtgängig geführt ist und die Grundkörper nicht zerstört werden.

Die gezeigte Schweißdrahtführung zeichnet sich durch einen besonders kompakten Aufbau aus. Bei einem Schweißdrahtdurchmesser von 1,9 mm können Kugeln mit einem Durchmesser von 4 mm verwendet werden. Der Kugelkopf hat einen Außendurchmesser von 11 mm, und der Maximaldurchmesser des Einzelelementes beträgt 16 mm bei einer Gesamtlänge von rund 20 mm. Durch das Zusammenwirken der Kugelpfanne 16 mit dem Kugelkopf 12 sind die Einzelelemente so dicht miteinander verbunden, dass kein zusätzlicher Schutz gegen von außen eindringenden Staub etc. notwendig ist.

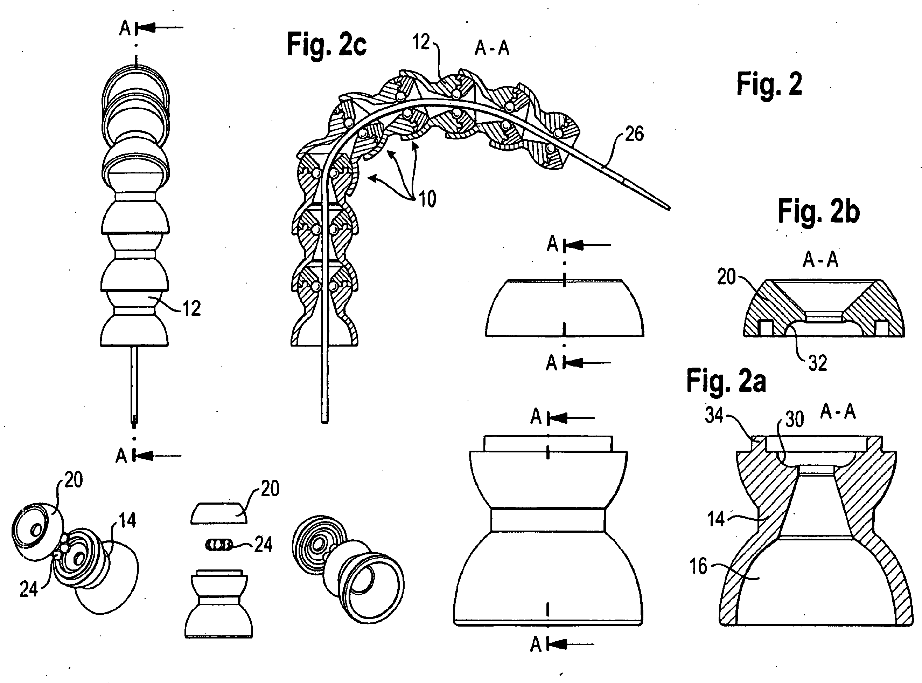

In Figur 2 ist eine Schweißdrahtführung gemäß einem zweiten Beispiel gezeigt. Für die von dem vorhergehenden Beispiel bekannten Bauteile werden dieselben Bezugszeichen verwendet, und es wird insoweit auf die obigen Erläuterungen verwiesen.

Der Unterschied zum ersten Beispiel besteht im wesentlichen in der Ausgestaltung der Führungsgestaltung für den Schweißdraht. Als Führungsgestaltung werden hier fünf Kugeln 24 verwendet, die in eine umlaufende Aufnahme 30 (siehe Figur 2a) eingesetzt sind. Eine Gegenfläche 32 ist im Ansatzstück 20 ausgebildet (siehe Figur 2b), das auf einen Rastring 34 am Grundkörper 14 aufgerastet wird. Das Ansatzstück 20 bildet zusammen mit einer geeignet geformten Fläche am Grundkörper 14 den Kugelkopf 12 des Einzelelements 10. Die Kugeln 24 bilden zusammen die Führungsgestaltung für den Schweißdraht 26 (siehe insbesondere Figur 2c), der von den Kugeln reibungsarm im Inneren der Einzelelemente 10 geführt wird, selbst wenn die von den Einzelelementen gebildete Führung eine vergleichsweise enge Krümmung aufweist, wie in Figur 2c gezeigt. Auch bei dieser Ausführungsform ist die Länge der Kugelpfanne bzw. der die Kugelpfanne bildenden Schürze des Grundkörpers 14 so bemessen, dass die maximale Schwenkbarkeit eines Einzelelements relativ zum benachbarten Einzelelement beschränkt ist, und zwar auf ein solches Maß, dass der durch die maximal gekrümmte Führung verlaufende Schweißdraht nur an der Führungsgestaltung anliegt und nicht an der Grundkörpern.

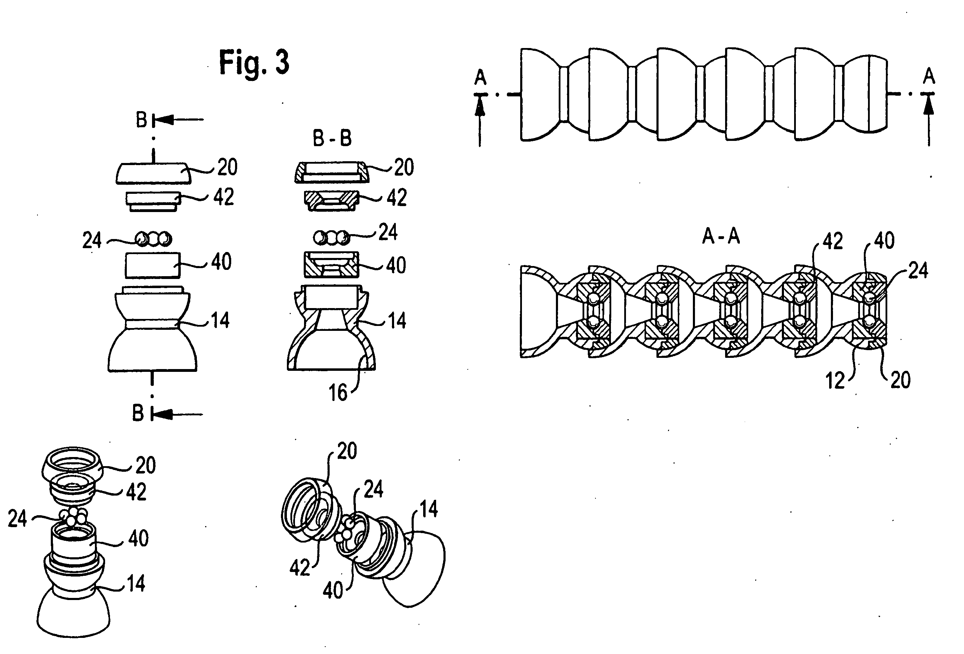

In Figur 3 ist ein weiteres Beispiel gezeigt. Für die von den vorhergehenden Beispielen bekannten Bauteile werden dieselben Bezugszeichen verwendet Beispielen, und es wird insoweit auf die obigen Erläuterungen verwiesen.

Das Beispiel gemäß Figur 3 unterscheidet sich von dem in Figur 2 gezeigten Beispiel im Wesentlichen dadurch, dass in den Grundkörper 14 ein Laufring 40 aus verschleißfestem Material eingesetzt ist. Dieser wirkt ähnlich wie der Laufring eines Kugellagers und wird komplettiert von einem Gegenstück 42, das auf den Laufring 40 aufgesetzt wird. Der Laufring 40 und das Gegenstück 42 bestehen aus einem verschleißfesten Material, beispielsweise Stahl. Am Grundkörper 14 werden der Laufring 40 und das Gegenstück 42 vom Ansatzstück 20 gehalten, das auf den Grundkörper 14 aufgesetzt wird. Auch bei dieser Ausführungsform wird der Kugelkopf 12 des Grundkörpers 14 durch das Ansatzstück 20 zusammen mit einem geeignet geformten Flächenabschnitt des Grundkörpers gebildet. Die Kugelpfanne 16 entspricht derjenigen dem ersten und dem zweiten Beispiel. Die bei der dritten Beispiel gebildete Führungsgestaltung für den Schweißdraht entspricht im Wesentlichen der von dem zweiten Beispiel bekannten Führungsgestaltung.

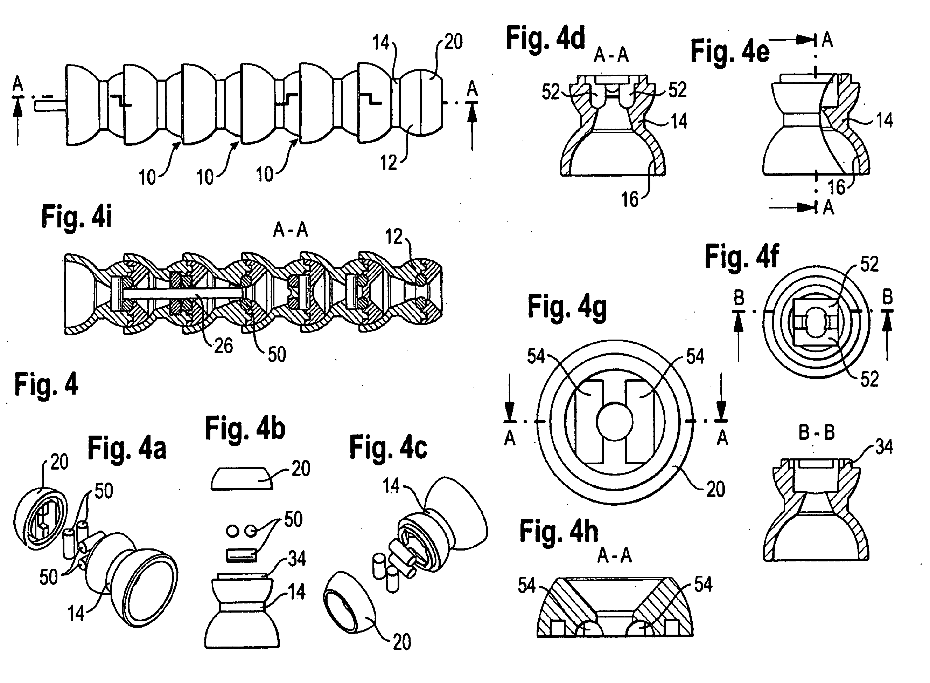

In Figur 4 ist ein viertes Beispiel gezeigt. Für die von den vorhergehenden Beispielen bekannten Bauteile werden dieselben Bezugszeichen verwendet, und es wird insoweit auf die obigen Erläuterungen verwiesen.

Das Beispiel gemäß Figur 4 unterscheidet sich von dem zweiten Beispiel im Wesentlichen dadurch, dass für die Führungsgestaltung keine kugelförmigen Wälzkörper verwendet werden, sondern zylinderrollenförmige Wälzkörper 50. Diese sind einander paarweise gegenüberliegend angeordnet, wobei das zweite Paar gegenüber dem ersten Paar um 90° verdreht ist (siehe die Figuren 4a, 4b und 4c). Die Zylinderrollen 50 des ersten Paares stützen sich dabei an den Zylinderrollen 50 des zweiten Paares ab. Im Grundkörper 14 sind Führungsflächen 52 für die Zylinderrollen 50 des ersten Paares ausgebildet (siehe die Figuren 4d bis 4f), während im Ansatzstück 20 gegenüberliegende Führungsflächen 54 vorgesehen sind (siehe die Figuren 4g und 4h). Wie in Figur 4i zu sehen ist, werden die Zylinderrollen 50 aneinanderliegend im Grundkörper gehalten, wenn das Ansatzstück 20 auf den Grundkörper 14 aufgesetzt ist. Auf diese Weise ist im Inneren der Grundkörper eine Führungsgestaltung für den Schweißdraht 26 definiert.

Es könnte auch vorgesehen sein, die Wälzkörper in kleine clipartige Lagerklammem bzw. - flächen einzusetzen.

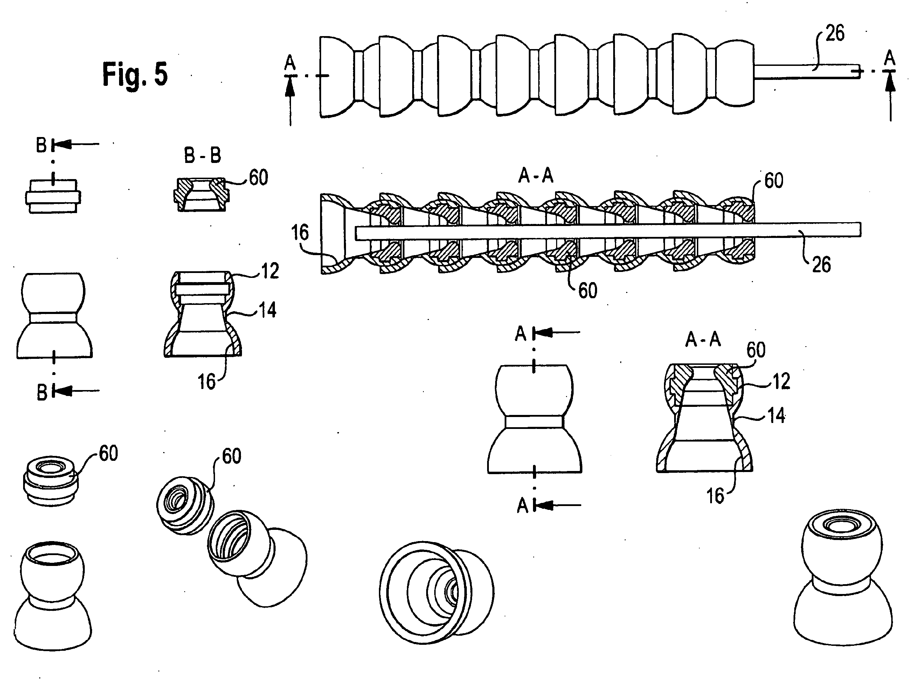

In Figur 5 ist ein fünftes Beispiel gezeigt. Für die von den vorhergehenden Beispielen bekannten Bauteile werden dieselben Bezugszeichen verwendet, und es wird insoweit auf die obigen Erläuterungen verwiesen.

Beispiel Das fünfte Beispiel unterscheidet sich von den vorhergehenden Beispielen dadurch, dass als Führungsgestaltung für den Schweißdraht ein geschlossener Ring 60 verwendet wird, der aus einem reibungsarmen Material besteht, beispielsweise Keramik. Der Ring 60 ist fest im Grundkörper 14 verankert, insbesondere bereits in diesen eingegossen. Somit ist der Kugelkopf 12 ausschließlich durch das Material des Grundkörpers 14 gebildet. Der Ring 60 weist auf seiner Innenfläche eine abgerundete Kontur auf, die ausgehend vom engsten Querschnitt sich mit einer sanften Rundung nach jeder Seite erweitert. Auf diese Weise ist unabhängig von dem Winkel, in welchem der Schweißdraht durch den Ring 60 geführt wird, eine sanft abgerundete Führungsfläche bereitgestellt.

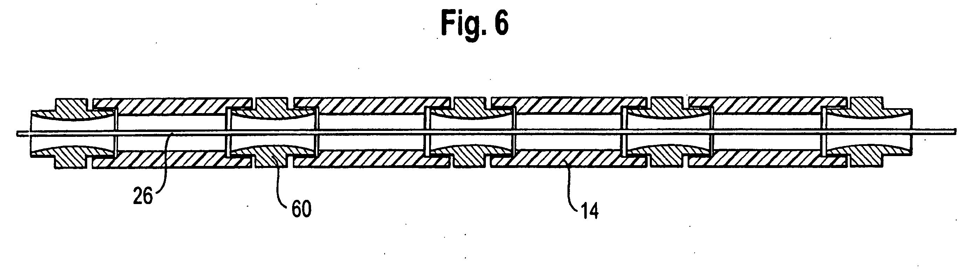

In Figur 6 ist ein vereinfachtes Beispiel gezeigt, welche die von dem fünften Beispiel bekannten Ringe 60 verwendet. Jeder Ring ist auf beiden Seiten mit einem umlaufenden Absatz versehen, auf den ein kurzer Rohrabschnitt aufgesteckt ist. Dieser besteht aus einem elastisch verformbaren Material, beispielsweise Kunststoff, so dass die Beweglichkeit in allen Richtungen gewährleistet ist. Jedes Einzelelement ist also gebildet aus einem Ring und einem Rohrabschnitt. Abweichend von den vorhergehenden Beispielen ist die Beweglichkeit hier nicht gegeben durch Bewegung eines starren Einzelelements gegenüber dem benachbarten, sondern aufgrund der Eigenelastizität der Einzelelemente, die letztlich zu einer Beweglichkeit der Einzelelemente relativ zueinander führt.

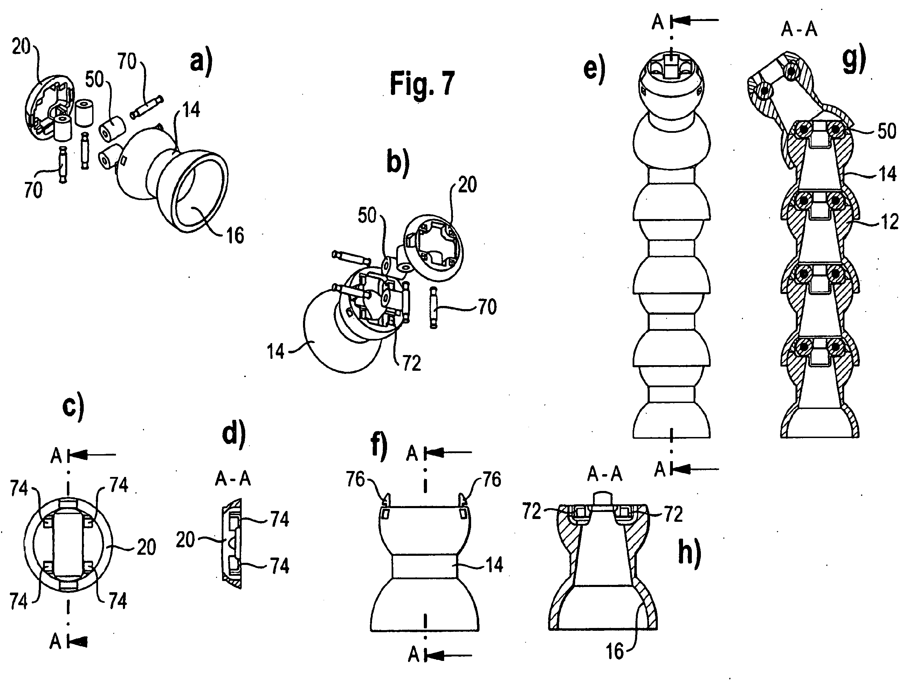

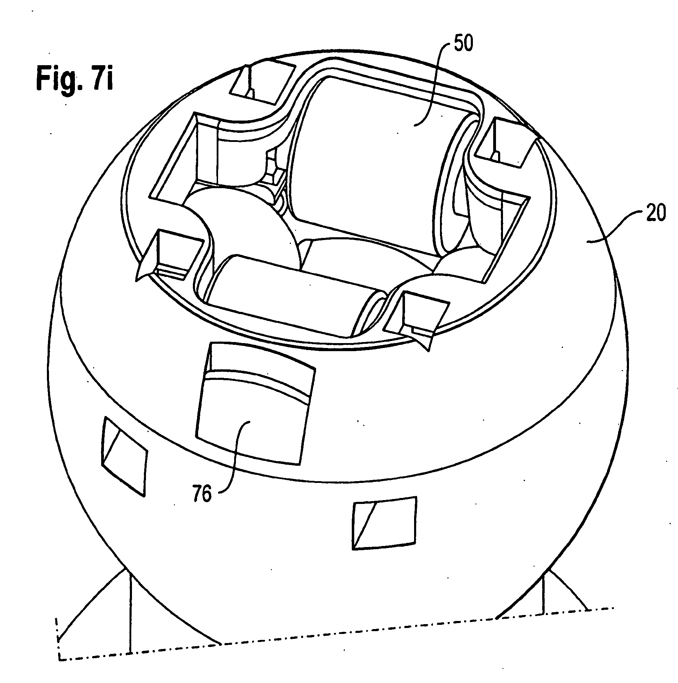

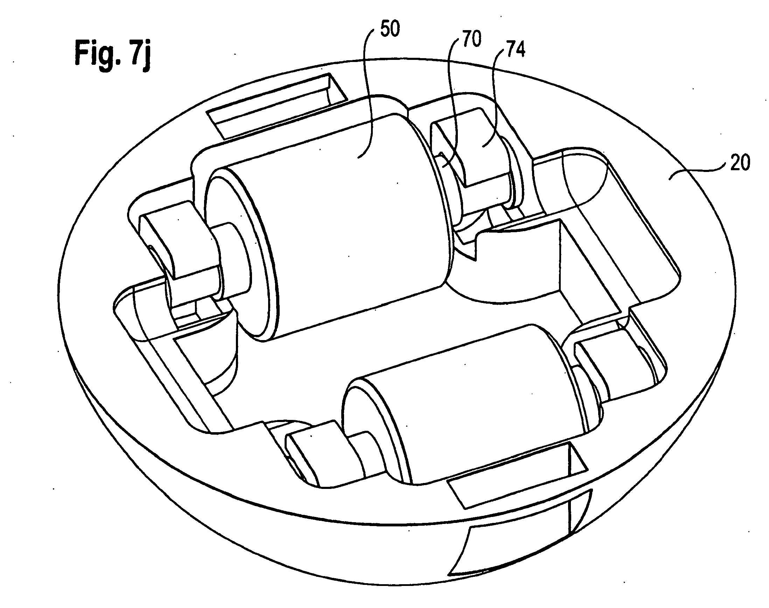

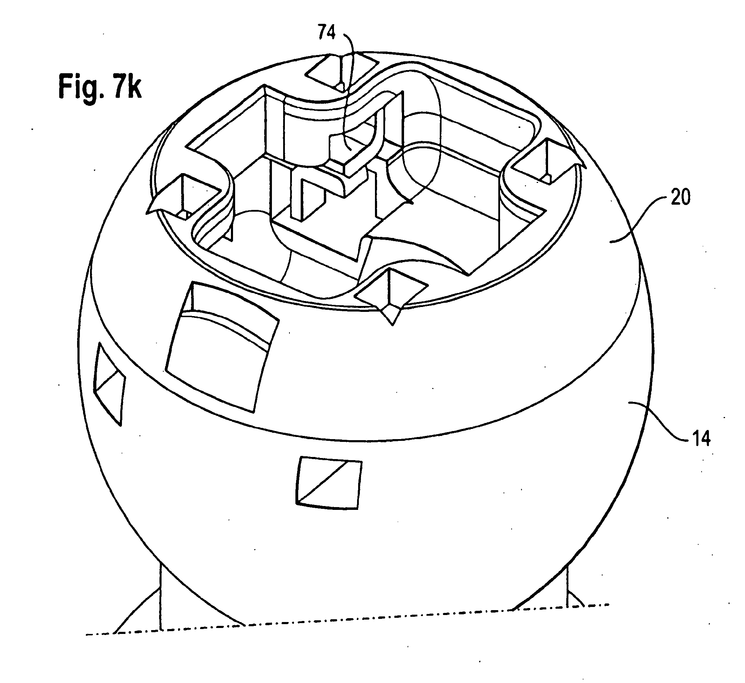

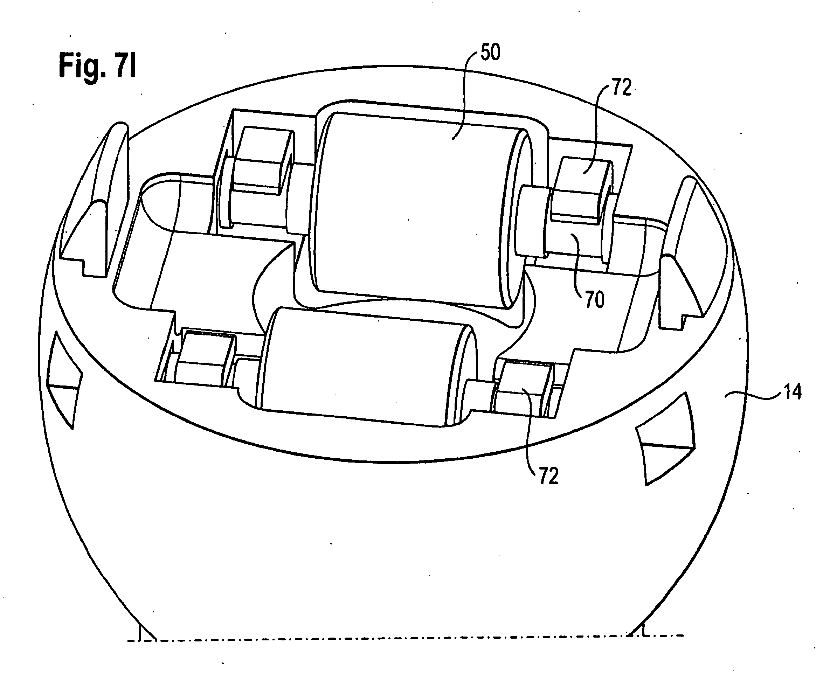

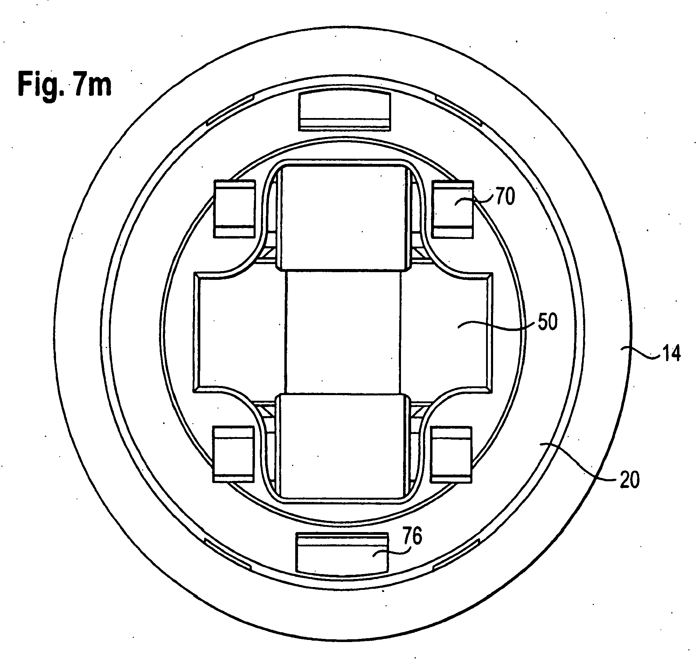

In Figur 7 ist ein siebtes Beispiel gezeigt. Für die von den vorhergehenden Beispielen bekannten Bauteile werden dieselben Bezugszeichen verwendet, und es wird insoweit auf die obigen Erläuterungen verwiesen.

Das siebte Beispiel unterscheidet sich von dem vierten Beispiel dadurch, dass die zylinderförmigen Wälzkörper 50 auf Achsen 70 gelagert sind. Diese sind hinter Haltelaschen 72 im Grundkörper 14 und hinter Haltelaschen 74 im Ansatzstück 20 eingesetzt. Zum einen können sich die Wälzkörper 50 frei mit geringer Reibung auf den Achsen 70 drehen. Zum anderen können sich die Achsen frei mit geringer Reibung zwischen den Haltelaschen und dem Grundkörper bzw. dem Ansatzstück drehen. Dies gewährleistet eine leichtgängige Führungsgestaltung für den Schweißdraht auch dann, wenn sich Schmutz im Bereich der Führungsgestaltung ansammelt. Selbst wenn eine der Lagerstellen Wälzkörper/Achse und Achse/Haltelaschen durch Schmutz schwergängiger wird, ist die verbleibende Lagerstelle weiterhin reibungsarm drehbar.

Das Ansatzstück 20 wird am Grundkörper 14 durch zwei Rastlaschen 76 gehalten.

Gemäß einer nicht dargestellten Beispiels variante können die Wälzkörper auch mit kleinen Lagerfortsätzen versehen sind, die hinter den Haltelaschen gehalten sind. In diesem Fall drehen sich die Lagerfortsätze hinter den Haltelaschen.

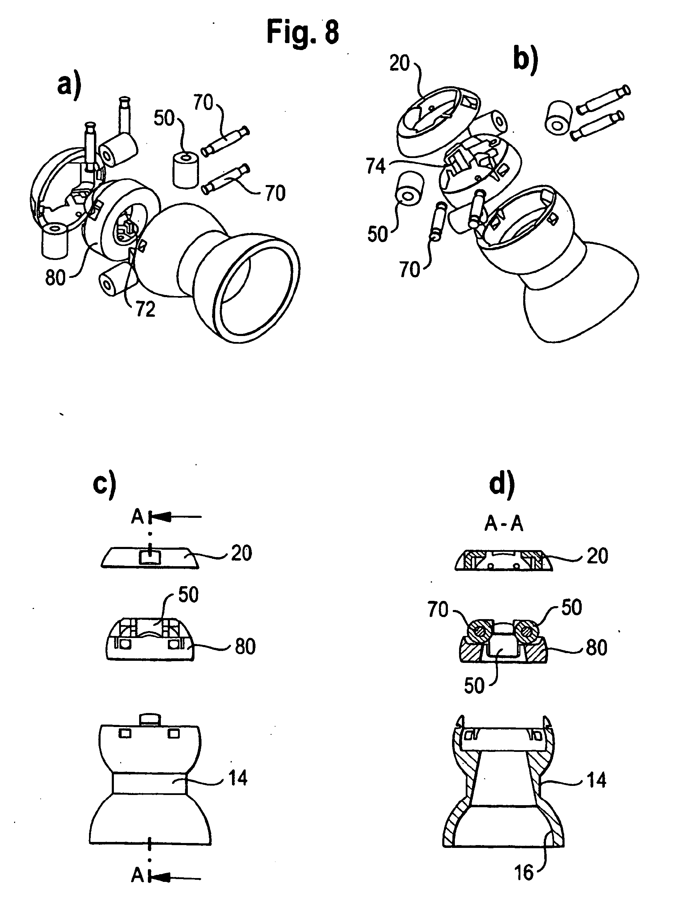

In Figur 8 ist ein achtes Beispiel gezeigt. Für die von den vorhergehenden Beispielen bekannten Bauteile werden dieselben Bezugszeichen verwendet, und es wird insoweit auf die obigen Erläuterungen verwiesen.

Das achte Beispiel unterscheidet sich von dem siebten Beispiel dadurch, dass die beiden Paare von zylinderförmigen Wälzkörpern in einem Zwischenring 80 gelagert sind. Dieser ist mit den Haltelaschen 72 bzw. 74 versehen.

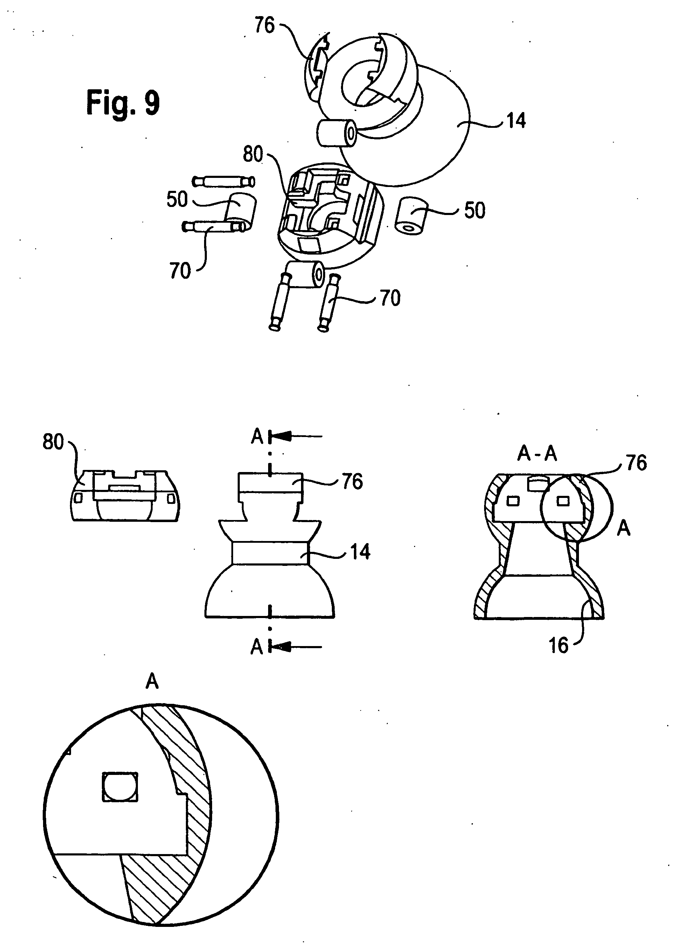

In Figur 9 ist ein neuntes Beispiel gezeigt. Für die von den vorhergehenden Beispielen bekannten Bauteile werden dieselben Bezugszeichen verwendet, und es wird insoweit auf die obigen Erläuterungen verwiesen.

Das neunte Beispiel unterscheidet sich von dem achten Beispiel dahingehend, dass das Ansatzstück 20 weggelassen wurde. Stattdessen ist der Zwischenring 80, der die Wälzkörper aufnimmt, so groß ausgeführt, dass es die obere Hälfte des Kugelkopfes 12 bildet. Er ist am Grundkörper 14 mit zwei groß ausgeführten Rastlaschen 76 gehalten.

Als Material für den Grundkörper 14 und auch das Ansatzstück 12 ist insbesondere Kunststoff geeignet, vorzugsweise Polyamid. Es ist grundsätzlich auch möglich, die Grundkörper aus einem anderen Material herzustellen, beispielsweise Metall oder Holz.

Das zweite, vierte sowie siebte bis neunte Beispiel ist besonders geeignet für die Führungsgestaltung des Schweißdrahtes vom Schweißdrahtbehälter zu den Transportrollen für den Schweißdraht, also in dem Bereich, in welchem der Schweißdraht gezogen wird. Dort ist es wichtig, in den Krümmungen der Schweißdrahtführung eine Führungsgestaltung mit Wälzlagern bereitzustellen, da dies die Reibung verringert. In diesem Bereich der Schweißvorrichtungen sind die Abmessungen der Schweißdrahtführung auch nicht übermäßig wichtig, so dass der geringfügig größere Außendurchmesser der Führung, bedingt durch die aufzunehmenden Wälzkörper, nicht ins Gewicht fällt. Im Bereich zwischen den Transportrollen und dem Schweißkopf wird vorzugsweise die Schweißdrahtführung gemäß dem fünften Beispiel verwendet. Dort wird der Schweißdraht geschoben, so dass die auftretende Reibung von untergeordneter Bedeutung ist. Dafür ist der geringere Außendurchmesser der Schweißdrahtführung, der aufgrund des mit kleinen Abmessungen herstellbaren Rings 60 erzielbar ist, von größerer Bedeutung.

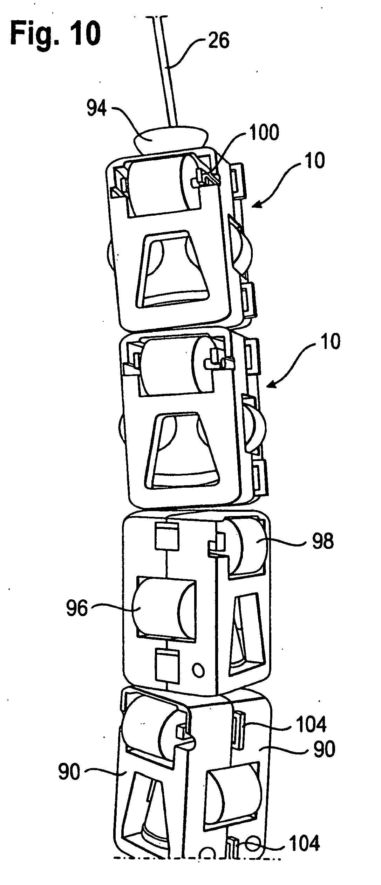

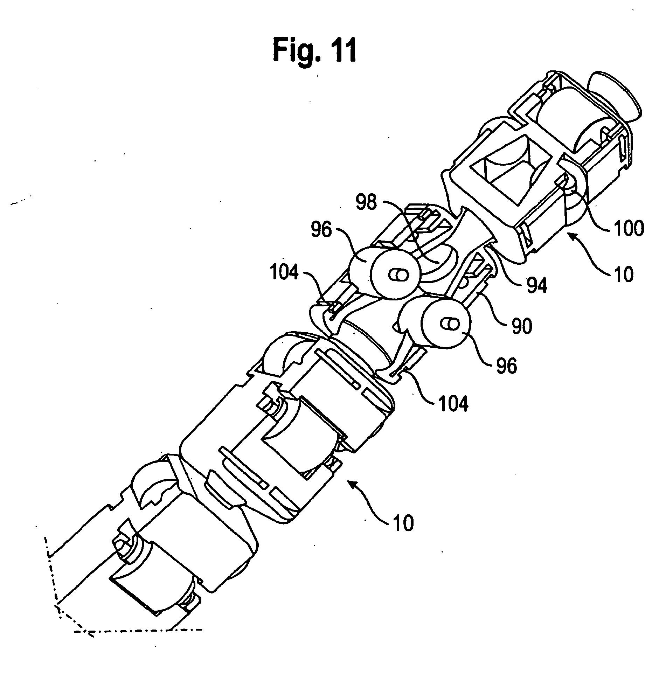

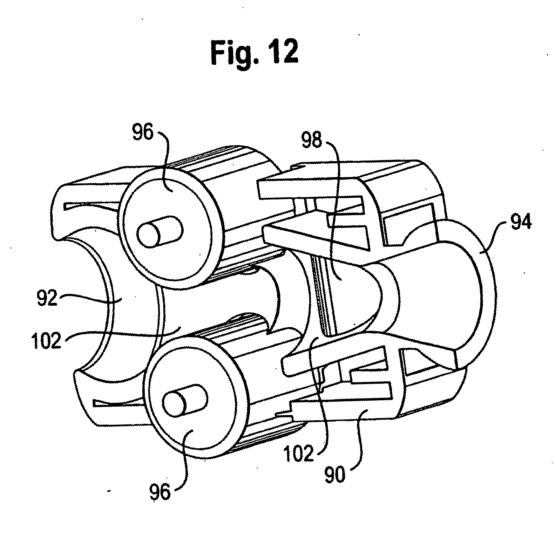

In den Figuren 10 bis 12 ist eine Ausführungsform gemäß der Erfindung dargestellt. Bei dieser Ausführungsform ist die Schweißdrahtführung durch eine Vielzahl von Einzelelementen 10 gebildet, die gelenkig miteinander gekoppelt sind, und zwar durch eine kugelgelenkartige Verbindung, die es den Einzelelementen ermöglicht, sich um einen bestimmten Betrag relativ zum benachbarten Einzelelement zu verstellen und auch um ihre Längsachse zu verdrehen.

Jedes Einzelelement 10 besteht aus zwei Hälften 90, die miteinander verclipst werden, um ein Einzelelement 10 zu bilden. Jede Hälfte 90 weist einen sich in Umfangsrichtung über 180° erstrecken Lagerpfannenabschnitt 92 auf sowie einen sich über ebenfalls 180° erstreckenden Lagerpfannenabschnitt 94. Wie in den Figuren zu sehen ist, wird bei der Ausführungsform für die gelenkige Verbindung zwischen den Einzelelementen kein Kugelsegment verwendet, das einen Großkreis der Kugel enthält, sondern es wird als Lagerkopf mathematisch betrachtet nur eine Kugelschicht verwendet, die keinen Großkreis der entsprechenden Kugel enthält und in einem kleinen Lagerpfannenabschnitt aufgenommen ist.

Als Führungsgestaltung für den Schweißdraht sind in jedem Einzelelement 10 insgesamt vier Führungswalzen 96, 98 angeordnet, die einander paarweise gegenüberliegen. Jede Führungswalze ist mit einer Drehachse versehen, wobei die Drehachsen der beiden Führungswalzen 96 senkrecht zu den Drehachsen der beiden Führungswalzen 98 ausgerichtet sind. Die Drehachsen können einstückig mit den Führungswalzen ausgebildet oder separate Bauteile sein, auf welche die Führungswalzen aufgeschoben sind.

Die beiden Führungswalzen 96 sind in zwei verschiedenen Hälften 90 des entsprechenden Einzelelementes gelagert. Die Führungswalzen 98 dagegen sind jeweils in einer der Hälften 90 des entsprechenden Einzelelements gelagert. Zu diesem Zweck sind dort Schnapphaken 100 vorgesehen, die es gemäß der Erfindung ermöglichen, die entsprechende Führungswalze von außen in das Einzelelement einzusetzen, so dass sie dort automatisch verrastet.

Im Inneren jedes Einzelelements 10 sind Führungsflächen 102 für den Schweißdraht vorgesehen, die gewährleisten, dass der Schweißdraht in die Führung eingefädelt werden kann. Die Führungsflächen sorgen dafür, dass der Schweißdraht durch die aneinandergereihten Einzelelemente geschoben werden kann, ohne dass sich das vorderste Ende des Schweißdrahtes irgendwo verhakt.

Besonders vorteilhaft bei der Ausführungsform gemäß der Erfindung ist, dass die Einzelelemente einen etwa quadratischen Querschnitt, hier mit abgerundeten Ecken, haben. Die Führungswalzen 96, 98 stehen zwar über die Außenfläche des entsprechenden Einzelelements hervor, jedoch nicht über eine Kreislinie, deren Mittelpunkt auf der Mittelachse des entsprechenden Einzelelements liegt und durch die vier Ecken des Querschnitts verläuft. Dies ermöglicht, auf die Führung einen Mantel aufzuschieben, beispielsweise ein Kunststoffrohr, so dass kein Schmutz in die Reihe von Einzelelementen eindringen kann, der die Leichtgängigkeit der Führungswalzen beeinträchtigen könnte. Die Führungswalzen können dabei nicht an der Innenwand des Mantels anliegen, da sie nur geringfügig über die Außenfläche des entsprechenden Einzelelements hinausragen. Auf diese Weise ist gewährleistet, dass keine unerwünschte Reibung bei der Drehung der Führungswalzen auftritt.

Ein weiterer Vorteil bei der Ausführungsform gemäß du Erfindung besteht darin, dass die Führungswalzen, wenn der Mantel von der Schweißdrahtführung abgezogen wurde, von außen sichtbar sind und daher inspiziert werden können, ohne die Einzelelemente voneinander zu trennen oder sie gar auseinanderzubauen. Vorteilhaft ist auch, dass die Führungswalzen mit einem größeren Durchmesser ausgeführt werden können als beispielsweise bei dem siebten Beispiel, da sie nicht vollständig im Inneren der Einzelelemente aufgenommen sind, sondern über deren Außenfläche hervorstehen können. Der große Durchmesser der Führungswalzen führt zu einer geringen Reibung, da sich größere Führungswalzen leichter drehen lassen als kleinere.

Die Montage der Einzelelemente und das Zusammenfügen der Einzelelemente zu einer Kette erfolgt in der folgenden Weise: Zunächst werden in eine Hälfte 90 eines Einzelelements die beiden Führungswalzen 96 eingelegt. Dann wird die zweite Hälfte aufgesetzt und an der ersten Hälfte befestigt, so dass die beiden Führungswalzen 96 zwischen den beiden Hälften 90 gelagert sind. Die Befestigung der beiden Hälften aneinander erfolgt mittels geeigneter Rastmittel, hier mittels Laschen oder Clipsen 104. Zur Positionierung der beiden Hälften aneinander sind kleine (nicht dargestellte) Positionierungsmittel vorgesehen, beispielsweise Nasen und Vertiefungen. Die Führungswalzen 98 werden entweder anschließend in die beiden Hälften eingeclipst oder wurden schon vorher dort montiert. Dann wird eine Hälfte 90 des nachfolgenden Einzelelements so an das bereits fertiggestellte Einzelelement angesetzt, dass dessen aus zwei Lagerkopfkopfabschnitten 94 zusammengesetzter Lagerkopf, genauer gesagt das gebildete Segment des Kugelkopfes, im Lagerpfannenabschnitt 92 der angesetzten Hälfte 90 aufgenommen ist. Nach Aufsetzen der zweiten Hälfte 90 wird das Segment des Lagerkopfes des bereits vorher zusammengesetzten Einzelkörpers in der aus den beiden Lagerpfannenabschnitten 92 gebildeten Lagerpfanne des neu zusammengesetzten Einzelkörpers aufgenommen und gehalten. Ein besonderer Vorteil besteht darin, dass die Einzelelemente unlösbar aneinander befestigt sind. Im Gegensatz zu den vorhergehenden Ausführungsformen, bei denen die Kugelkopf eines Einzelelements in die Kugelpfanne des benachbarten Einzelelements eingeschnappt ist und durch Aufbringen einer geeignet großen Kraft aus dieser wieder herausgezogen werden konnte, sind die Einzelelemente bei der zehnten Ausführungsform formschlüssig aneinander angebracht, so dass sie nur durch Trennen der beiden Hälften 90 wieder voneinander gelöst werden können.

Der maximale Schwenkwinkel eines Einzelelements relativ zum benachbarten Einzelelement wird durch Anlage der einander gegenübediegenden Stirnseiten der benachbarten Einzelelemente aneinander bestimmt. Unabhängig vom Verschwenken kann jedes Einzelelement sich frei um seine Längsachse relativ zum benachbarten Einzelelement drehen. Im Betrieb sind daher die Einzelelemente alle unterschiedlich (aber statistisch gleichmäßig verteilt) ausgerichtet, so dass der Schweißdraht unabhängig von der jeweiligen Krümmung der Führung gleichmäßig gut geführt ist.

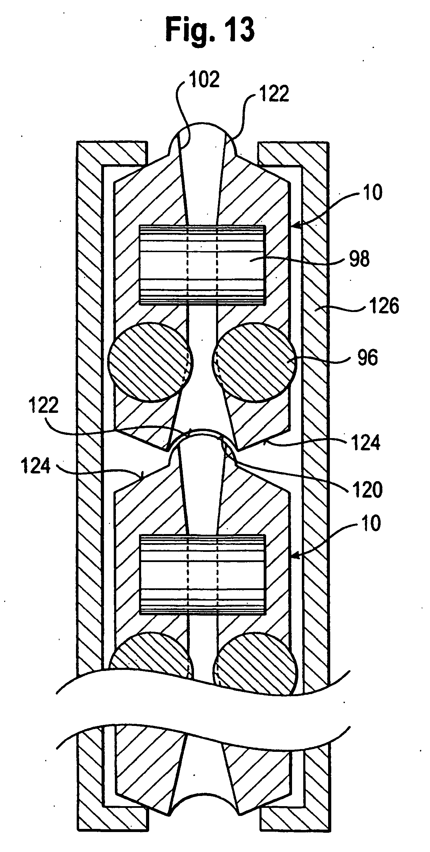

In Figur 13 ist schematisch ein zehntes Beispiel gezeigt. Dieses unterscheidet sich von den vorhergehenden Beispielen dadurch, dass die Einzelelemente 10 nicht mehr durch ein eigentliches Gelenk aneinander gekoppelt sind, sondern nur gelenkig aneinander abgestützt sind. Zu diesem Zweck ist jedes Einzelelement an einem Ende mit einer Gelenkvertiefung 120 versehen, in der sich ein Gelenkvorsprung 122 des benachbarten Einzelelements 10 abstützt. Die einander zugewandten Flächen von Gelenkvertiefung 120 und Gelenkvorsprung haben vorzugsweise dieselbe oder wenigstens im Wesentlichen dieselbe Krümmung. Die Stirnseiten 124 der Einzelelemente sind kegelstumpfförmig ausgeführt, so dass die Einzelelement relativ zueinander verschwenkt werden können, ohne dass sich der Gelenkvorsprung von der zugeordneten Gelenkvertiefung lösen muss. Der Zusammenhalt der Einzelelemente in Längsrichtung wird von einem Mantel 126 gewährleistet, der die beiden am Ende der von den Einzelelementen gebildeten Kette angeordneten Elemente festhält und selbst in Längsrichtung die nötige Haltekraft aufbringen kann. Als Mantel kann beispielsweise ein Gewebeschlauch oder ein Kunststoffrohr verwendet werden.

Als Führungsgestaltung werden auch bei der elften Ausführungsform Führungswalzen 96, 98 verwendet, die einander paarweise gegenüberliegen. Diese werden von außen in geeignete Aufnahmeöffnungen eingesetzt und dort beispielsweise durch Rastlaschen gehalten, die an den Lagerachsen angreifen.

In Längsrichtung erstreckt sich durch jedes Einzelelement ein Kanal für den Schweißdraht, der von Führungsflächen 102 begrenzt ist, die wiederum von den Führungswalzen 96, 98 unterbrochen werden.

Gemäß einer nicht dargestellten Weiterbildung kann anstelle des Gelenkvorsprungs an den Einzelelementen ein Kugelkopf verwendet werden, der in einer geeigneten Gelenkpfanne im benachbarten Einzelelement einrastet.

## Patentansprüche

1. Flexible Führung, insbesondere für einen Schweißdraht, gebildet durch eine Mehrzahl von Einzelelementen (10), die miteinander gelenkig verbunden sind, wobei die Einzelelemente (10) relativ zueinander in jeder Richtung schwenkbar sind, **dadurch gekennzeichnet, dass** jedes Einzelelement (10) mit einem ersten und einem zweiten Paar von Führungswalzen (96, 98) versehen ist, wobei die Drehachsen des ersten Paares etwa senkrecht zu den Drehachsen des zweiten Paares ausgerichtet sind, wobei die Lagerachsen mindestens von zwei Führungswalzen (96, 98) im Körper des Einzelelements (10) eingerastet sind und wobei die Führungswalzen (96, 98) von außen in den Körper des Einzelelements (10) eingesetzt sind.

2. Flexible Führung nach Anspruch 1, **dadurch gekennzeichnet, dass** die Einzelelemente (10) nach Art eines Kugelgelenks gelenkig miteinander verbunden sind.

3. Flexible Führung nach Anspruch 2, **dadurch gekennzeichnet, dass** jedes Einzelelement (10) an einem Ende eine Kugelpfanne (16) und am anderen Ende einen Kugelkopf (12) aufweist.

4. Flexible Führung nach Anspruch 3, **dadurch gekennzeichnet, dass** der Kugelkopf eines Einzelelements (10) in die Kugelpfanne (16) eines benachbarten Einzelelements (10) eingerastet ist.

5. Flexible Führung nach Anspruch 3 oder Anspruch 4, **dadurch gekennzeichnet, dass** der Kugelkopf (12) durch ein Ansatzstück (20) gebildet ist, das am Grundkörper (14) des entsprechenden Einzelelements (10) angebracht ist.

6. Flexible Führung nach Anspruch 3 oder Anspruch 4, **dadurch gekennzeichnet, dass** der Kugelkopf (12) gebildet ist durch ein Ansatzstück (20) in Kombination mit einem kugelabschnittsförmigen Teil des entsprechenden Einzelelements (10).

7. Flexible Führung nach Anspruch 1, **dadurch gekennzeichnet, dass** das Einzelelement (10) aus zwei Hälften gebildet ist, die miteinander verrastet sind.

8. Flexible Führung nach einem der vorhergehenden Ansprüche, **dadurch gekennzeichnet, dass** die Führungswalzen (96, 98) über die Außenfläche des Einzelelements (10) hinausragen.

9. Flexible Führung nach einem der vorhergehenden Ansprüche, **dadurch gekennzeichnet, dass** jedes Einzelelement (10) einen quadratischen Querschnitt, gegebenenfalls mit abgerundeten Ecken, aufweist und dass die Führungswalzen (96, 98) nicht über eine Kreislinie hinausragen, die durch die vier Ecken des Einzelelements (10) verläuft.

10. Flexible Führung nach einem der vorhergehenden Ansprüche, **dadurch gekennzeichnet, dass** der Grundkörper (14) aus Kunststoff besteht.

## Claims

1. A flexible guide device, in particular for a welding wire, formed by a plurality of individual elements (10) which are connected to each other in an articulated manner, the individual elements (10) being adapted to swivel in relation to each other in any direction, **characterized in that** each individual element (10) is provided with first and second pairs of guide rollers (96, 98), the pivot pins of the first pair being oriented roughly perpendicularly to the pivot pins of the second pair, the bearing pins of at least two guide rollers (96, 98) being locked in place in the body of the individual element (10), and the guide rollers (96, 98) being inserted in the body of the individual element (10) from the outside.

2. The flexible guide device according to claim 1, **characterized in that** the individual elements (10) are connected to each other in an articulated manner in the nature of a ball joint.

3. The flexible guide device according to claim 2, **characterized in that** each individual element (10) includes a ball socket (16) at one end and a ball head (12) at the other end.

4. The flexible guide device according to claim 3, **characterized in that** the ball head of an individual element (10) is locked in place in the ball socket (16) of a neighboring individual element (10).

5. The flexible guide device according to claim 3 or claim 4, **characterized in that** the ball head (12) is formed by an extension (20) which is fitted to the base body (14) of the respective individual element (10).

6. The flexible guide device according to claim 3 or claim 4, **characterized in that** the ball head (12) is formed by an extension (20) in combination with a part in the shape of a spherical segment of the respective individual element (10).

7. The flexible guide device according to claim 1, **characterized in that** the individual element (10) is formed of two halves which are locked with each other.

8. The flexible guide device according to any of the preceding claims, **characterized in that** the guide rollers (96, 98) project beyond the outer surface of the individual element (10).

9. The flexible guide device according to any of the preceding claims, **characterized in that** each individual element (10) has a square cross-section, possibly with rounded corners, and that the guide rollers (96, 98) do not project beyond a circular line which runs through the four corners of the individual element (10).

10. The flexible guide device according to any of the preceding claims, **characterized in that** the base body (14) is made of a plastic material.

## Revendications

1. Guidage flexible, en particulier pour un fil à souder, formé par une pluralité d'éléments individuels (10) reliés les uns aux autres de manière articulée, les éléments individuels (10) étant aptes à pivoter les uns par rapport aux autres dans chaque direction, **caractérisé en ce que** chaque élément individuel (10) est pourvu d'une première et d'une deuxième paire de rouleaux de guidage (96, 98), les axes de rotation de la première paire étant orientés approximativement perpendiculairement aux axes de rotation de la deuxième paire, les axes de palier d'au moins deux rouleaux de guidage (96, 98) étant enclenchés dans le corps de l'élément individuel (10), et les rouleaux de guidage (96, 98) étant insérés depuis l'extérieur dans le corps de l'élément individuel (10).

2. Guidage flexible selon la revendication 1, **caractérisé en ce que** les éléments individuels (10) sont reliés les uns aux autres de façon articulée à la manière d'un joint sphérique.

3. Guidage flexible selon la revendication 2, **caractérisé en ce que** chaque élément individuel (10) présente un coussinet sphérique (16) à une extrémité et une tête sphérique (12) à l'autre extrémité.

4. Guidage flexible selon la revendication 3, **caractérisé en ce que** la tête sphérique d'un élément individuel (10) est enclenchée dans le coussinet sphérique (16) d'un élément individuel (10) voisin.

5. Guidage flexible selon la revendication 3 ou la revendication 4, **caractérisé en ce que** la tête sphérique (12) est formée par un embout (20) agencé sur le corps de base (14) de l'élément individuel (10) correspondant.

6. Guidage flexible selon la revendication 3 ou la revendication 4, **caractérisé en ce que** la tête sphérique (12) est formée par un embout (20) en combinaison avec une partie en forme de segment sphérique de l'élément individuel (10) correspondant.

7. Guidage flexible selon la revendication 1, **caractérisé en ce que** l'élément individuel (10) est formé par deux moitiés enclenchées l'une dans l'autre.

8. Guidage flexible selon l'une des revendications précédentes, **caractérisé en ce que** les rouleaux de guidage (96, 98) font saillie de la surface extérieure de l'élément individuel (10).

9. Guidage flexible selon l'une des revendications précédentes, **caractérisé en ce que** chaque élément individuel (10) a une section transversale carrée présentant, le cas échéant, des coins arrondis, et **en ce que** les rouleaux de guidage (96, 98) ne font pas saillie d'une ligne circulaire s'étendant à travers les quatre coins de l'élément individuel (10).

10. Guidage flexible selon l'une des revendications précédentes, **caractérisé en ce que** le corps de base (14) est en matière plastique.
